(19)

Europäisches
Patentamt
European
Patent Office
Office européen
des brevets

(11) **EP 3 495 319 A1**

(12) **EUROPEAN PATENT APPLICATION**
published in accordance with Art. 153(4) EPC

(43) Date of publication:
**12.06.2019 Bulletin 2019/24**

(21) Application number: **17836905.4**

(22) Date of filing: **31.07.2017**

(51) Int Cl.:
$C01B\ 25/37$ (2006.01)    $C08K\ 3/32$ (2006.01)
$C08L\ 101/00$ (2006.01)    $G02B\ 5/02$ (2006.01)

(86) International application number:
**PCT/JP2017/027689**

(87) International publication number:
**WO 2018/025800 (08.02.2018 Gazette 2018/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.08.2016 JP 2016152342**

(71) Applicant: **Mitsui Mining & Smelting Co., Ltd.**
**Shinagawa-ku**
**Tokyo 141-8584 (JP)**

(72) Inventors:
• **YONEDA, Yoshihiro**
**Ageo-shi**
**Saitama 362-0021 (JP)**
• **TAMURA, Kenji**
**Ageo-shi**
**Saitama 362-0021 (JP)**
• **ITOH, Jun-ichi**
**Ageo-shi**
**Saitama 362-0021 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **RARE EARTH PHOSPHATE PARTICLES, METHOD FOR IMPROVING SCATTERING PROPERTY USING SAME**

(57) Rare earth phosphate particles of the present invention comprises aggregated particles formed of a plurality of primary particles of a rare earth phosphate represented by $LnPO_4$, wherein Ln represents at least one element selected from the group consisting of Sc, Y, La, Ce, Pr, Nd, Sm, Eu, Gd, Tb, Dy, Ho, Er, Yb, and Lu. The cumulative volume particle size at a cumulative volume of 50 vol%, $D_{50}$, of the aggregated particles is from 0.1 μm to 20 μm as measured through particle size distribution analysis using a laser diffraction and scattering method. The rare earth phosphate particles of the present invention are to be distributed in a substrate or on a surface of a substrate and used to cause scattering of light.

EP 3 495 319 A1

**Description**

Technical Field

The present invention relates to rare earth phosphate particles. Also, the present invention relates to a method for improving the scattering property using the rare earth phosphate particles.

Background Art

A light-scattering sheet formed of a transparent resin containing inorganic particles is used in various optical devices such as backlight modules for liquid crystal displays, screens for image display apparatuses such as projection televisions, transparent screens for use in head-up displays and the like, and lighting fixtures. Such a light-scattering sheet is required to have the excellent light-scattering property while ensuring transparency. For this reason, an inorganic material with a high refractive index, such as titania, silica, zirconia, or zinc oxide, is used for the inorganic particles. Patent Literature 1, for example, proposes a curable resin composition containing zinc oxide, as a transparent material with a high refractive index.

Citation List

Patent Literature

Patent Literature 1: JP 2010-138270A

Summary of Invention

However, even though a light-scattering sheet in which the inorganic particles are used as disclosed in Patent Literature 1 has transparency and the light-scattering property, the light-scattering property of the light-scattering sheet is insufficient when it is actually used in a display apparatus. This makes it difficult to obtain a clear image, leaving room for improvement.

To address this issue, an object of the present invention is to provide particles that, when distributed in a substrate or on a surface of a substrate, can improve the light scattering property of the substrate while ensuring the transparency of the substrate.

The present invention achieves the above-described object by providing rare earth phosphate particles including aggregated particles including a plurality of primary particles of a rare earth phosphate represented by $LnPO_4$, wherein Ln represents at least one element selected from the group consisting of Sc, Y, La, Ce, Pr, Nd, Sm, Eu, Gd, Tb, Dy, Ho, Er, Yb, and Lu,

wherein a cumulative volume particle size at a cumulative volume of 50 vol%, $D_{50}$, of the aggregated particles is from 0.1 $\mu$m to 20 $\mu$m as measured through particle size distribution analysis using a laser diffraction and scattering method, and

the rare earth phosphate particles are to be distributed in a substrate or on a surface of a substrate and used to cause scattering of light.

Also, the present invention provides a method for improving the scattering property of a resin sheet as a substrate, the method including incorporating the above-described rare earth phosphate particles into the resin sheet.

Also, the present invention provides a method for improving the scattering property of a substrate, the method including distributing the above-described rare earth phosphate particles on a surface of the substrate.

Description of Embodiments

Hereinafter, the present invention will be described based on a preferred embodiment thereof. Rare earth phosphate particles of the present invention are to be distributed in a substrate or on a surface of a substrate and used to cause scattering of light. More specifically, the rare earth phosphate particles of the present invention are distributed in a substrate in a uniformly dispersed state, are distributed in a substrate in an unevenly dispersed state in which the particles are concentrated on one surface side of the substrate, or are distributed in a coating layer formed on the surface of a substrate in a uniformly dispersed state, and are used to cause scattering of light incident on the substrate. Scattering of incident light is generally divided into forward scattering and backscattering. With regard to the scattering of light, the rare earth phosphate particles of the present invention are used to cause either or both of the forward scattering and the backscattering. The term "scattering", when used simply hereinafter, encompasses both forward scattering and backscattering. Also, the term "light" hereinafter used means light containing light rays in the visible wavelength region.

The rare earth phosphate particles of the present invention are an assemblage of aggregated particles, and a plurality of primary particles of a rare earth phosphate represented by $LnPO_4$ are aggregated into the aggregated particles. In the formula, Ln represents at least one element selected from the group consisting of Sc, Y, La, Ce, Pr, Nd, Sm, Eu, Gd, Tb, Dy, Ho, Er, Yb, and Lu. The term "aggregated particles" hereinafter used may refer to powder as an assemblage of aggregated particles or may refer to individual aggregated particles constituting the powder, depending on the context.

A rare earth phosphate is a material with a high refractive index. Thus, the rare earth phosphate particles of the present invention cause significant scattering of light when distributed in a substrate or on the surface of a substrate in a dispersed manner.

In general, a rare earth phosphate is also a material with a high Abbe number. With respect to rare earth phosphates, the inventors of the present invention have conducted various studies on their optical properties other than the Abbe number, and it has been found that wavelength dependence of the refractive indices of rare earth phosphates is smaller than that of other materials with high Abbe numbers such as zirconia. That is to say, it has been found that when light containing light rays having various wavelengths is incident on a rare earth phosphate, variation in the refraction level is small. Thus, high-contrast scattered light can be obtained by using the rare earth phosphate particles of the present invention.

The rare earth element of the rare earth phosphate represented by $LnPO_4$ is as described above. Among the above-described rare earth elements, it is preferable to use at least one rare earth element selected from Y, La, Gd, Yb, and Lu, because these rare earth elements have a small wavelength dependence of a refractive index. The rare earth elements may be used singly or in a combination of two or more.

The rare earth phosphate used in the present invention may be a crystalline rare earth phosphate or may be an amorphous rare earth phosphate. In general, a crystalline rare earth phosphate is obtained when rare earth phosphate particles are produced using a method described later. A crystalline rare earth phosphate is preferable in view of a high refractive index.

The rare earth phosphate particles of the present invention are composed of aggregated particles of primary particles. Aggregated particles of primary particles are commonly also called as secondary particles. As used herein, the term "primary particle" refers to an object that is regarded as the smallest unit of particles when judged from the apparent geometrical form thereof. The primary particles may be polycrystals or single crystals of the rare earth phosphate.

The aggregated particles are each composed of two or more primary particles that are aggregated together. The aggregation of primary particles occurs due to, for example, an intermolecular force, chemical bonding, bonding via a binder, or the like. When rare earth phosphate particles are produced using the method described later, the primary particles are aggregated by an intermolecular force and/or chemical bonding.

It is advantageous that a cumulative volume particle size at a cumulative volume of 50 vol%, $D_{50}$, of the aggregated particles be from 0.1 μm to 20 μm as measured through particle size distribution analysis using a laser diffraction and scattering method. As a result of studies by the inventors of the present invention, it has been found that, when the aggregated particles are distributed in a substrate or on the surface thereof so as to cause scattering of light, the scattering level can increases due to the $D_{50}$ of the aggregated particles within this range while maintaining the transparency of the substrate. In view of further increasing the scattering level while maintaining the transparency of the substrate, the $D_{50}$ of the aggregated particles is more preferably from 0.3 μm to 20 μm, even more preferably from 0.3 μm to 10 μm, and yet more preferably from 0.3 μm to 3 μm. Aggregated particles having such a particle size can be suitably produced using the method described later, for example.

The cumulative volume particle size $D_{50}$ can be measured using the following method. The rare earth phosphate particles and water are mixed, and the mixture is then subjected to dispersing treatment for 1 minute using a common ultrasonic bath. Measurement is performed using an apparatus LS13 320 manufactured by Beckman Coulter, Inc.

In the present invention, the shape of the aggregated particles is not critical as long as the cumulative volume particle size $D_{50}$ is in the above-described range. The aggregated particles individually have different numbers of primary particles aggregated, and also have different sizes and shapes of primary particles. Accordingly, the aggregated particles have various shapes. Generally speaking, there is the following tendency: as the shapes of the aggregated particle are closer to a sphere, the scattering property is higher, and also the dispersibility of the aggregated particles is better in a resin composition for forming a resin sheet as a substrate and a resin composition for forming a surface coating layer of a substrate described later.

As a result of studies by the inventors of the present invention, it has been found that as the particle size distribution curve of the aggregated particles is sharper, the scattering property of the aggregated particles is higher. The particle size distribution of the aggregated particles can be evaluated on the basis of the value of the ratio $D_{99}/D_{50}$ as a measure. $D_{99}$ represents a cumulative volume particle size at a cumulative volume of 99 vol% as measured through particle size distribution analysis using a laser diffraction and scattering method. As the ratio $D_{99}/D_{50}$ is closer to 1, the particle size distribution curve of the aggregated particles is sharper. In the present invention, the ratio $D_{99}/D_{50}$ is preferably 10 or less, more preferably 5 or less, and even more preferably 2.5 or less. $D_{99}$ can be measured using the same method as $D_{50}$.

Since the aggregated particles are aggregates of the primary particles of the rare earth phosphate, the aggregated particles have pores between the primary particles. It have been found that it is advantageous for further enhancing the scattering property that the pore size distribution curve of these pores of the aggregated particles have at least one peak within a range from 0.2 μm to 10 μm. It is particularly advantageous for even further enhancing the scattering property that the pore size distribution curve of the pores of the aggregated particles have only one peak within this range. The aggregated particles may also have at least one peak outside this range while having only one peak within this range.

In relation to the pores of the aggregated particles, it is preferable for further enhancing the scattering property that the average pore size of the pores be from 0.2 μm to 10 μm. In particular, the average pore size is more preferably from 0.2 μm to 8 μm and even more preferably from 0.5 μm to 6 μm, in view of even further enhancing the scattering property.

In order to set the pore size distribution and the average pore size of the aggregated particles as described above, the aggregated particles can be produced using the method described later, for example. The pore size distribution and the average pore size of the aggregated particles can be measured using the following method, for example. The pore size distribution and the average pore size can be measured using a mercury intrusion porosimeter for pore distribution measurement (e.g., Auto Pore IV manufactured by Micromeritics Instrument Corp.).

The particle size of each rare earth phosphate primary particles constituting the aggregated particles is one of the factors that affect the particle size and the like of the aggregated particles. As a result of studies by the inventors of the present invention, it has been found that the particle size of the primary particles is preferably from 10 nm to 100 nm, more preferably from 12 nm to 50 nm, and even more preferably from 12 nm to 25 nm. As used herein, the term "particle size of primary particles" refers to the particle size of primary particles in terms of BET specific surface area.

The particle size of primary particles in terms of BET specific surface area can be measured using the following method.

The BET specific surface area can be measured by a nitrogen adsorption method using a "FlowSorb 2300" manufactured by Shimadzu Corporation. The amount of powder to be measured is 0.3 g, and the preliminary degassing is conducted at the atmospheric pressure at 120°C for 10 minutes.

Then, the particle size of primary particles is calculated from the found value of the BET specific surface area using the following equation, assuming that the primary particles have a spherical shape:

$$d = 6000/(A \cdot \rho)$$

wherein d is the particle size [nm] of the primary particles to be calculated, A is the specific surface area [m$^2$/g] measured by a single point BET method, and ρ is the density [g/cm$^3$] of the measuring object.

With regard to the primary particles of the rare earth phosphate, it is considered that it is advantageous that the primary particles have high crystallinity in view of increasing the refractive index even more to thereby further enhance the scattering property. The crystallinity of the primary particles can be evaluated on the basis of the value of the ratio of the crystallite size of the rare earth phosphate particles to the particle size of the primary particles in terms of BET specific surface area, "crystallite size of rare earth phosphate particles/particle size of primary particles in terms of BET specific surface area", as a measure. As this value is closer to 1, the crystallinity of the primary particles of the rare earth phosphate is higher, and the primary particles are closer to single crystals. In the present invention, the value of "crystallite size of rare earth phosphate particles/particle size of primary particles in terms of BET specific surface area" is preferably 0.45 or greater, more preferably 0.50 or greater, and even more preferably 0.53 or greater.

The crystallite size of the rare earth phosphate particles can be measured using the following method. An X-ray diffractometer (RINT-TTR II manufactured by Rigaku Corporation) is used. A dedicated glass holder is filled with a rare earth phosphate, and measurement is performed using Cu Kα radiation generated by applying a voltage-current of 50 kV-300 mA, under the conditions of a sampling angle of 0.02° and a scanning rate of 4.0°/min. The crystallite size is obtained from the measurement results using JADE XRD analysis software.

It is preferable that the rare earth phosphate particles of the present invention comprising aggregated particles of primary particles have a high whiteness L*. When the rare earth phosphate particles having a high whiteness L* are blended in a resin, the resulting resin composition containing the resin and the rare earth phosphate particles tends not to assume a color. Specifically, the whiteness L* is preferably 70 or higher, more preferably 80 or higher, and even more preferably 90 or higher.

With respect to the whiteness L*, the brightness of powder can be directly measured in accordance with JIS Z8729 "Methods of measurement for color of objects using a U*V*W* system", using a spectrophotometer (CM-2600d manufactured by Konica Minolta, Inc.), for example.

Moreover, the surfaces of the rare earth phosphate particles of the present invention can be subjected to lipophilization treatment in order to achieve favorable dispersibility of the rare earth phosphate particles in a resin composition for forming a resin sheet as a substrate and that for forming a surface coating layer of a substrate described later, as long as such a treatment does not impair the effects of the present invention. Examples of the lipophilization treatment include treatment with any of various coupling agents. Examples of the coupling agent include organic metal compounds. Specifically, a silane coupling agent, a zirconium coupling agent, a titanium coupling agent, an aluminum coupling agent, and the like can be used.

Examples of the silane coupling agent include vinyltrichlorosilane, vinyltrimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3 -methacryloxypropyltrimethoxysilane, 3 -methacryloxypropylmethyldiethoxysilane, 3-methacryloxypropyltriethoxysilane, 3-acryloxypropyltrimethoxysilane, N-2(aminoethyl)3-aminopropylmethyldimethoxysilane, N-2(aminoethyl)3 -aminopropyltrimethoxysilane, N-2(aminoethyl)3-aminopropyltriethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, N-(vinylbenzyl)-2-aminoethyl-3-aminopropyltrimethoxysilane hydrochloride, 3 -ureidopropyltriethoxysilane, 3 -chloropropyltrimethoxysilane, 3 -mercaptopropylmethyldimethoxysilane, 3-mercaptopropyltrimethoxysilane, bis(triethoxysilylpropyl)tetrasulfide, 3-isocyanatopropyltriethoxysilane, tetramethoxysilane, tetraethoxysilane, methyltrimethoxysilane, methyltriethoxysilane, dimethyltriethoxysilane, phenyltriethoxysilane, hexamethyldisilazane, hexyltrimethoxysilane, and decyltrimethoxysilane.

Examples of the titanium coupling agent include tetraisopropyl titanate, tetra-n-butyl titanate, butyl titanate dimer, tetra(2-ethylhexyl)titanate, tetramethyl titanate, titanium acetylacetonate, titanium tetraacetylacetonate, titanium ethylacetoacetate, titanium octanediolate, titanium lactate, titanium triethanolaminate, and polyhydroxy titanium stearate. Examples of the zirconium coupling agent include zirconium n-propylate, zirconium n-butylate, zirconium tetraacetylacetonate, zirconium monoacetylacetonate, zirconium bisacetylacetonate, zirconium monoethylacetoacetate, zirconium acetylacetonate bisethylacetoacetate, zirconium acetate, and zirconium monostearate.

Examples of the aluminum coupling agent include aluminum isopropylate, mono sec-butoxyalminum diisopropylate, aluminum sec-butylate, aluminum ethylate, ethylacetoacetate aluminum diisopropylate, aluminum tris(ethylacetoacetate), alkylacetoacetate aluminum diisopropylate, aluminum monoacetylacetonate bis(ethylacetoacetate), aluminum tris(acetylacetonate), aluminum monoisopropoxy monooleoxy ethylacetoacetate, cyclic aluminum oxide isopropylate, cyclic aluminum oxide octylate, and cyclic aluminum oxide stearate.

The above-described various coupling agents may be used singly or in a combination of two or more. In the case where a silane coupling agent is used as the coupling agent, the surfaces of the rare earth phosphate particles are coated with a silane compound. Preferably, the silane compound has a lipophilic group, for example, an alkyl group or a substituted alkyl group. The alkyl group may be straight or branched. In either case, it is preferable that the alkyl group have 1 to 20 carbon atoms, because a favorable affinity for a resin can be obtained. In the case where the alkyl group is substituted, the substituent may be an amino group, a vinyl group, an epoxy group, a styryl group, a methacrylic group, an acrylic group, an ureido group, a mercapto group, a sulfide group, an isocyanate group, or the like. It is preferable that the amount of the silane compound with which the surfaces of the rare earth phosphate particles are coated be 0.01 to 200 mass% and more preferably 0.1 to 100 mass% with respect to the mass of the rare earth phosphate particles, because a favorable affinity for a resin can be obtained.

The rare earth phosphate particles of the present invention can be added to, for example, a resin to form a resin composition in order to improve the scattering property of the resin composition. The form of the resin composition is not limited; however, the form of a resin sheet, that is, a form in which the rare earth phosphate particles of the present invention are distributed and dispersed in a resin sheet as a substrate is advantageous because a resin composition in such a form can be easily applied to a light-scattering sheet. In this manner, the rare earth phosphate particles of the present invention can be incorporated into a resin sheet as a substrate to improve the scattering property of the resin sheet.

In the case where the rare earth phosphate particles of the present invention are added to a resin to form a light-scattering sheet, the type of the resin to which the rare earth phosphate particles of the present invention are added is not limited, and any of fabricable thermoplastic resins and thermosetting resins can be used. In particular, it is preferable to use a thermoplastic resin because thermoplastic resins can be easily formed into a sheet. Examples of the thermoplastic resin include polyolefin resins such as polyethylene and polypropylene, polyester resins such as polyethylene terephthalate, polybutylene terephthalate, and polycarbonate, polyacrylic resins such as polyacrylic acid, polyacrylate polymethacrylic acid, and polymethacrylate, polyvinyl resins such as polystyrene and polyvinylchloride, cellulose resins such as triacetyl cellulose.

In the case where the rare earth phosphate particles of the present invention are added to a resin to form a light-scattering sheet, the content of the rare earth phosphate particles in the light-scattering sheet is preferably from 0.05 mass% and 10 mass%, more preferably from 0.1 mass% to 10 mass%, and even more preferably from 0.1 mass% to 5 mass% with respect to the total mass of the light-scattering sheet, in view of the balance between the transmitting property and the light-scattering property. In view of the light-scattering property, handleability, and the like, the thickness of the light-scattering sheet is preferably from 20 $\mu$m to 3000 $\mu$m and more preferably from 50 $\mu$m to 200 $\mu$m.

A light-scattering sheet or the like formed of a resin composition containing the rare earth phosphate particles of the present invention and a resin can be obtained by, for example, the following manner: a resin in a molten state are kneaded with the rare earth phosphate particles of the present invention, and the kneaded product is then formed into a sheet using a known sheet-forming method such as inflation, T-die, solution casting, or calendering.

The rare earth phosphate particles of the present invention can also be distributed on the surface of a substrate to improve the scattering property of the substrate. The method for distributing the rare earth phosphate particles of the present invention on the surface of a substrate may be as follows, for example: the rare earth phosphate particles of the present invention, an organic solvent, and a binder resin are mixed to prepare a composition as a coating solution, and the coating solution is applied to the surface of a substrate through coating or spraying, using a roller, a spray gun, or the like. In this case, there can be obtained a light-scattering member including a substrate and a coating layer formed of the resin composition containing the rare earth phosphate particles of the present invention and the resin, the coating layer being provided on the surface of the substrate. Alternatively, to distribute the rare earth phosphate particles of the present invention on the surface of a substrate, the rare earth phosphate particles of the present invention can also be directly distributed on the surface of a substrate through sputtering or the like without use of a binder such as a resin.

In the case where a coating layer formed of a resin composition containing the rare earth phosphate particles of the present invention and a resin is provided on the surface of a substrate to form a light-scattering member (e.g., light-scattering member in which the coating layer is provided on the surface of a sheet-like substrate), the type of the resin contained in the coating layer is not limited, and any of resins commonly used as binder resins can be used. Examples of such a resin include polyolefin resins such as polyethylene and polypropylene, polyester resins such as polyethylene terephthalate, polybutylene terephthalate, and polycarbonate, polyacrylic resins such as polyacrylic acid, polyacrylate, polymethacrylic acid, and polymethacrylate, polyvinyl resins such as polystyrene and polyvinylchloride, and cellulose resins such as triacetyl cellulose.

In the case where a light-scattering member in which a coating layer is provided on the surface of a substrate is formed as described above, the content of the rare earth phosphate particles contained in the coating layer is preferably from 0.01 mass% to 90 mass% and more preferably from 0.1 mass% to 65 mass% with respect to the total mass of the coating layer, in view of the balance between the transmitting property and the light-scattering property.

A light-scattering sheet and a light-scattering member that are obtained by the above-described methods can be suitably used as, for example, display members, lighting members, window members, illumination members, light-guiding plate members, screens for projectors, transparent screens for use in head-up displays and the like, and agricultural materials for plastic greenhouses and the like. The light-scattering sheet can also be incorporated into optical devices. Examples of such an optical device include liquid-crystal-display televisions, personal computers, tablets, and mobile devices such as smartphones.

Next, a preferred method for producing the rare earth phosphate particles of the present invention will be described. To produce the rare earth phosphate particles of the present invention, first, an aqueous solution containing one or more rare earth element sources and an aqueous solution containing phosphoric acid radicals are mixed to cause one or more rare earth phosphates to be precipitated. For example, an aqueous solution containing phosphoric acid radicals is added to an aqueous solution containing one or more rare earth element sources to thereby precipitate a rare earth phosphate. In an exemplary production method suitable for the present invention, the precipitate can be dried through spray-drying or the like and then baked to thereby produce particles that have a desired shape. Furthermore, particles that have a desired shape and an extremely high crystallinity can be obtained by performing the above-described precipitating step while heating. Water may remain in the rare earth phosphate particles, and it is therefore preferable to heat the rare earth phosphate particles at a relatively low temperature in order to remove the water. A specific heating temperature is preferably from 80°C to 800°C, for example. The heating temperature when heating the aqueous solution containing a rare earth element source is preferably from 50°C to 100°C and more preferably from 70°C to 95°C. Aggregated particles that have the desired $D_{50}$ and particle size of primary particles can be obtained by performing the reaction while heating the aqueous solution within this temperature range. Also, aggregated particles that have the desired crystallinity of the primary particles, pore size distribution, average pore size, and whiteness can be obtained.

As the aqueous solution containing a rare earth element source, it is preferable to use an aqueous solution having a rare earth element concentration of 0.01 to 1.5 mol/liter, more preferably 0.01 to 1 mol/liter, and even more preferably 0.01 to 0.5 mol/liter. It is preferable that the rare earth element in the aqueous solution be in the form of trivalent ions or in the form of complex ions composed of a trivalent ion and ligands coordinated thereto. To prepare an aqueous solution containing a rare earth element source, for example, a rare earth oxide (e.g., $Ln_2O_3$ etc.) can be added to and dissolved in an aqueous nitric acid solution.

It is preferable for the aqueous solution containing phosphoric acid radicals that the total concentration of the phosphoric acid chemical species in the aqueous solution be 0.01 to 3 mol/liter, more preferably 0.01 to 1 mol/liter, and even more preferably 0.01 to 0.5 mol/liter. Alkali species can be added thereto in order to control the pH. As the alkali species, for example, basic compounds, such as ammonia, ammonium hydrogencarbonate, ammonium carbonate, sodium hydrogencarbonate, sodium carbonate, ethylamine, propylamine, sodium hydroxide, and potassium hydroxide, can be used.

The aqueous solution containing a rare earth element source and the aqueous solution containing phosphoric acid radicals are preferably mixed in a molar ratio of phosphoric acid ions to rare earth element ions of 0.5 to 10, more preferably 1 to 10, and even more preferably 1 to 5, because a precipitated product can be efficiently obtained.

The rare earth phosphate particles comprising aggregated particles thus obtained are collected through solid-liquid separation in accordance with an ordinary method, and then rinsed with water one or more times. It is preferable that the rare earth phosphate particles be rinsed with water until the conductivity of the liquid becomes 2000 $\mu$S/cm or less, for example.

Examples

Hereinafter, the present invention will be described in even more detail by way of examples. However, the scope of the present invention is not limited to the examples below. Hereinafter, "%" and "part" mean "mass%" and "part by mass" respectively unless otherwise specified.

Example 1

In this example, aggregated particles of lanthanum phosphate were produced. The production procedure was as follows.

600 g of water was weighed into glass container 1, and 61.7 g of 60% nitric acid (manufactured by Wako Pure Chemical Industries, Ltd.) and 26.6 g of $La_2O_3$ (manufactured by Nippon Yttrium Co., Ltd.) were added to the water, and dissolved therein by heating to 80°C. Separately, 600 g of water and 18.8 g of phosphoric acid 85% were put in another glass container 2.

Then, the content in glass container 2 was poured into glass container 1, and the resulting mixture underwent aging for 1 hour to obtain precipitate. The thus obtained precipitate was washed by decantation until the conductivity of the supernatant became 100 $\mu$S/cm or less. After the washing, the precipitate was collected through solid-liquid separation by vacuum filtration, followed by drying at 120°C in the atmosphere for 5 hours and subsequent baking at 450°C in the atmosphere for 3 hours.

Example 2

In this example, aggregated particles of gadolinium phosphate were produced. The production procedure was the same as in Example 1, except that 29.6 g of $Gd_2O_3$ (manufactured by Nippon Yttrium Co., Ltd.) was used instead of $La_2O_3$ in Example.

Example 3

In this example, aggregated particles of yttrium phosphate were produced. The production procedure was the same as in Example 1, except that 18.8 g of $Y_2O_3$ (manufactured by Nippon Yttrium Co., Ltd.) was used instead of $La_2O_3$ in Example 1.

Example 4

Aggregated particles were produced in the same manner as in Example 3, except that the baking temperature in the atmosphere was 800°C instead of 450°C.

Example 5

In this example, aggregated particles of yttrium phosphate were produced. The production procedure was as follows. Aggregated particles of yttrium phosphate were obtained in the same manner as in Example 4. Then, 10 g of yttrium phosphate and 20 g of pure water were mixed to obtain a slurry, and the slurry was treated for 5 hours using a paint shaker to puluverize yttrium phosphate. After the pluverization, the resulting slurry was subjected to solid-liquid separation to obtain a cake, and the cake was vacuum-dried.

Example 6

In this example, aggregated particles of lutetium phosphate were produced. The production procedure was the same as in Example 3, except that 33.1 g of $Lu_2O_3$ (manufactured by Nippon Yttrium Co., Ltd.) was used instead of $Y_2O_3$ in Example 3.

Example 7

In this example, aggregated particles of ytterbium phosphate were produced. The production procedure was the same as in Example 3, except that 32.8 g of $Yb_2O_3$ (manufactured by Nippon Yttrium Co., Ltd.) was used instead of $Y_2O_3$ in Example 3.

Example 8

In this example, aggregated particles of dysprosium phosphate were produced. The production procedure was the same as in Example 3, except that 31.1 g of $Dy_2O_3$ (manufactured by Nippon Yttrium Co., Ltd.) was used instead of $Y_2O_3$ in Example 3.

Example 9

In this example, aggregated particles of europium phosphate were produced. The production procedure was the same as in Example 3, except that 29.3 g of $Eu_2O_3$ (manufactured by Nippon Yttrium Co., Ltd.) was used instead of $Y_2O_3$ in Example 3.

Comparative Example 1

In this comparative example, aggregated particles of lutetium phosphate were produced. The production procedure was as follows.

370 g of water was weighed into glass container 1 and heated to 80°C, and 14.4 g of 60% nitric acid (manufactured by Wako Pure Chemical Industries, Ltd.) was then added to the water. Furthermore, 7.4 g of $Eu_2O_3$ (manufactured by Nippon Yttrium Co., Ltd.) was added thereto and completely dissolved therein. Separately, 390 g of water, 5.3 g of 85% phosphoric acid, and 9.3 g of 25% ammonia water were put in another glass container 2. The solution in glass container 1 and the solution in glass container 2 were simultaneously fed into a homogenizer each at 10 mL/min, and mixed with each other. The number of revolutions of the homogenizer was 20,000 rpm. After the mixing was completed, the precipitate produced was washed by decantation until the conductivity of the supernatant became 100 $\mu$S/cm or less. After the washing, the precipitate was collected through solid-liquid separation by vacuum filtration. The resulting precipitate was dried at 120°C in the atmosphere for 5 h, and furthermore, baked at 800°C in the atmosphere for 5 h.

The production method of Example 1 and the production method of Comparative Example 1 differ from each other mainly in the method for obtaining the precipitate of a rare earth phosphate and the conditions for baking the precipitate after solid-liquid separation.

Comparative Example 2

In this comparative example, aggregated particles of yttrium phosphate were produced. The production procedure was the same as in Example 1, except that 4.2 g of $Y_2O_3$ was used instead of $Lu_2O_3$ in Example.

Comparative Example 3

In this comparative example, zirconium oxide particles manufactured by Wako Pure Chemical Industries, Ltd., were used.

Comparative Example 4

In this comparative example, titanium oxide (anatase type) manufactured by Wako Pure Chemical Industries, Ltd., was used.

Evaluation

With respect to the aggregated particles obtained in Examples and Comparative Examples, $D_{50}$, $D_{99}/D_{50}$, the crystallite size, the particle size of the primary particles, the whiteness L*, the peak position of the pore size distribution, and the average pore size were measured using the following methods. Also, the scattering property and the transmitting property were evaluated using the following methods. Table 1 below shows the results.

Measurement of $D_{50}$ and $D_{99}$ and Calculation of $D_{99}/D_{50}$

0.1 g of rare earth phosphate particles was mixed with 10 ml of water, and the mixture was then subjected to dispersing treatment for 1 minute using an ultrasonic disperser (ASU-10 manufactured by AS ONE Corporation). $D_{50}$ and $D_{99}$ were measured using an apparatus LS13 320 manufactured by Beckman Coulter, Inc., and $D_{99}/D_{50}$ was calculated.

Measurement of Crystallite Size

An X-ray diffractometer (RINT-TTR II manufactured by Rigaku Corporation was used. A dedicated glass holder was filled with a rare earth phosphate, and measurement was performed using Cu K$\alpha$ radiation generated by applying a voltage-current of 50 kV-300 mA, under the conditions of a sampling angle of 0.02° and a scanning rate of 4.0°/min. The crystallite size was obtained from the measurement results using JADE XRD analysis software.

Measurement of Particle Size of Primary Particles

The particle size of primary particles in terms of BET specific surface area was measured.
The BET specific surface area was measured by a nitrogen adsorption method using a "FlowSorb 2300" manufactured by Shimadzu Corporation. The amount of powder to be measured was 0.3 g, and the preliminary degassing was conducted at the atmospheric pressure at 120°C for 10 minutes.
Then, the particle size of primary particles was calculated from the found value of the BET specific surface area using the following equation, assuming that the primary particles had a spherical shape:

$$d = 6000/(A \cdot \rho)$$

wherein d is the particle size [nm] of the primary particles to be calculated, A is the specific surface area [m$^2$/g] measured by a single point BET method, and $\rho$ is the density [g/cm$^3$] of the measuring object.

Measurement of the Whiteness

The brightness of powder was directly measured in accordance with JIS Z8729 "Methods of measurement for color of objects using a U*V*W* system", using a spectrophotometer (CM-2600d manufactured by Konica Minolta, Inc.).

Measurement of Peak Position of Pore Size Distribution and Average Pore Size

Measurement was performed using a mercury intrusion porosimeter for pore distribution measurement (Auto Pore IV manufactured by Micromeritics Instrument Corp.). In Examples for which two numerical values are shown in Table 1, two peaks were observed.

Evaluation of Scattering Property and Transmitting Property

First, 100 parts of the particles of each of the examples and the comparative examples were added to 100 parts (in terms of solid content) of an acrylic resin (manufactured by Mitsubishi Rayon Co., Ltd., product name: DIANAL LR-167). The obtained mixture was diluted with a mixed solvent of toluene and 1-butanol to a solid content of 50% and the resultant was then mixed in a paint shaker for 60 minutes to prepare a coating solution.
Next, this coating solution was applied to a polycarbonate sheet (manufactured by Takiron Co., Ltd., thickness: 2 mm) using a bar coater (#3) and dried at 80°C for 5 minutes to obtain a light-scattering sheet composed of a light-scattering layer and a polycarbonate substrate layer.
A laser pointer was directed toward the light-scattering sheet, and the clarity of a point image formed on the light-scattering sheet was visually observed to evaluate the scattering property of the light-scattering sheet acooding to the following criteria.

Evaluation Criteria for Scattering Property

good: the point image is clear.
poor: the point image is blurred and is not clear.

The transparency of the light-scattering sheet was evaluated according to the following criteria through visual observation.

Evaluation Criteria for Transparency

good: transparent
poor: opaque or translucent

Table 1

| | Aggregated particles | | | | | | | | | Light-scattering sheet | |
|---|---|---|---|---|---|---|---|---|---|---|---|
| | Rare earth phosphate | $D_{50}$ ($\mu$m) | $D_{99}/D_{50}$ | Crystallite size (nm) | Particle size of primary particles (nm) | Crystallite size/ Particl e size of primary particles | Whiteness L* | Peak of pore size distributio n ($\mu$m | Average pore size ($\mu$m) | Transmitting property | Light -scatterin g property |
| Ex. 1 | $LaPO_4$ | 1.30 | 1.98 | 10.1 | 18.9 | 0.53 | 96.0 | 0.05 9.20 | 5.34 | good | good |
| Ex. 2 | $GdPO_4$ | 1.20 | 1.88 | 21.1 | 24.2 | 0.87 | 97.0 | 0.10 3.15 | 3.24 | good | good |
| Ex. 3 | $YPO_4$ | 1.20 | 2.08 | 14.6 | 14.7 | 0.99 | 95.5 | 0.38 | 0.58 | good | good |
| Ex. 4 | $YPO_4$ | 1.50 | 3.53 | 21.5 | 27.8 | 0.77 | 97.7 | 0.15 2.10 | 1.37 | good | good |
| Ex. 5 | $YPO_4$ | 0.15 | 4.73 | 14.0 | 15.9 | 0.88 | 71.0 | 0.11 2.05 | 1.15 | good | good |
| Ex. 6 | $LuPO_4$ | 9.50 | 1.74 | 15.0 | 18.2 | 0.82 | 93.4 | 0.09 8.90 | 3.44 | good | fair |
| Ex. 7 | $YbPO_4$ | 5.60 | 1.66 | 17.6 | 21.6 | 0.81 | 95.2 | 0.11 4.90 | 2.75 | good | good |
| Ex. 8 | $DyPO_4$ | 7.20 | 1.95 | 20.8 | 26.7 | 0.78 | 98.2 | 0.10 8.20 | 5.22 | good | good |
| Ex. 9 | $EuPO_4$ | 3.10 | 1.77 | 21.0 | 27.8 | 0.76 | 96.8 | 0.13 3.00 | 1.88 | good | good |
| Com. Ex. 1 | $LuPO_4$ | 20.50 | 2.83 | 6.2 | 20.0 | 0.31 | 94.0 | 0.06 31.20 | 6.55 | good | poor |
| Com. Ex. 2 | $YPO_4$ | 84.30 | 3.44 | 19.4 | 45.1 | 0.43 | 94.3 | 0.04 38.10 | 8.56 | poor | poor |
| Com. Ex. 3 | $ZrO_2$ | 1.50 | 2.56 | 18.5 | 21.3 | 0.87 | 96.4 | 0.03 | 2.68 | poor | poor |
| Com. Ex. 4 | $TiO_2$ | 0.32 | 6.72 | N/A | 154.5 | - | 97.2 | 0.16 | 4.72 | poor | poor |

As is clear from the results shown in Table 1, it was found that when the aggregated particles of the rare earth phosphates obtained in the respective examples are used, the scattering property can be enhanced without impairing the transmitting property, as compared with zirconia and titania, which are conventionally known materials with high refractive indices. Thus, it can be seen that the rare earth phosphate particles of the present invention are useful for use in transparent screens, which are required to have the excellent transmitting property and scattering property.

Industrial Applicability

With the rare earth phosphate particles of the present invention, when the particles are distributed in a substrate or on a surface of a substrate, the light-scattering property of the substrate can be improved while ensuring transparency of the substrate.

**Claims**

1. Rare earth phosphate particles comprising aggregated particles including a plurality of primary particles of a rare earth phosphate represented by $LnPO_4$, wherein Ln represents at least one element selected from the group consisting of Sc, Y, La, Ce, Pr, Nd, Sm, Eu, Gd, Tb, Dy, Ho, Er, Yb, and Lu,
   wherein a cumulative volume particle size at a cumulative volume of 50 vol%, $D_{50}$, of the aggregated particles is from 0.1 $\mu$m to 20 $\mu$m as measured through particle size distribution analysis using a laser diffraction and scattering method, and
   the rare earth phosphate particles are to be distributed in a substrate or on a surface of a substrate and used to cause scattering of light.

2. The rare earth phosphate particles according to claim 1, wherein the ratio $D_{99}/D_{50}$ is 10 or less, the $D_{99}$ being a cumulative volume particle size at a cumulative volume of 99 vol% of the aggregated particles as measured through particle size distribution analysis using a laser diffraction and scattering method.

3. The rare earth phosphate particles according to claim 1 or 2, wherein a particle size of the primary particles in terms of BET specific surface area is from 10 nm to 100 nm.

4. The rare earth phosphate particles according to any one of claims 1 to 3, wherein the ratio of a crystallite size of the rare earth phosphate particles to the particle size of the primary particles in terms of BET specific surface area is 0.45 or greater.

5. The rare earth phosphate particles according to any one of claims 1 to 4, wherein the whiteness L* thereof is 70 or greater.

6. The rare earth phosphate particles according to any one of claims 1 to 5, wherein a pore size distribution has at least one peak within a range from 0.2 $\mu$m to 10 $\mu$m.

7. The rare earth phosphate particles according to claim 6, wherein the pore size distribution has only one peak within the range from 0.2 $\mu$m to 10 $\mu$m.

8. The rare earth phosphate particles according to any one of claims 1 to 7, wherein an average pore size is from 0.2 $\mu$m to 10 $\mu$m.

9. A method for improving the scattering property of a resin sheet as a substrate, the method comprising incorporating the rare earth phosphate particles according to any one of claims 1 to 8 into the resin sheet.

10. A method for improving the scattering property of a substrate, the method comprising distributing the rare earth phosphate particles according to any one of claims 1 to 8 on a surface of the substrate.

11. A resin composition comprising the rare earth phosphate particles according to any one of claims 1 to 8 and a resin.

12. A light-scattering sheet formed of a resin composition containing the rare earth phosphate particles according to any one of claims 1 to 8 and a resin.

13. A light-scattering member comprising a substrate and a coating layer provided on a surface of the substrate, the coating layer being formed of a resin composition containing the rare earth phosphate particles according to any one of claims 1 to 8 and a resin.

14. An optical device comprising the light-scattering sheet according to claim 12 or the light-scattering member according to claim 13.

<div align="center">

**INTERNATIONAL SEARCH REPORT**

</div>

| | International application No. |
|---|---|
| | PCT/JP2017/027689 |

**A. CLASSIFICATION OF SUBJECT MATTER**

*C01B25/37*(2006.01)i, *C08K3/32*(2006.01)i, *C08L101/00*(2006.01)i, *G02B5/02* (2006.01)i

According to International Patent Classification (IPC) or to both national classification and IPC

**B. FIELDS SEARCHED**

Minimum documentation searched (classification system followed by classification symbols)
C01B25/37, C08K3/32, C08L101/00, G02B5/02

Documentation searched other than minimum documentation to the extent that such documents are included in the fields searched
Jitsuyo Shinan Koho          1922-1996    Jitsuyo Shinan Toroku Koho    1996-2017
Kokai Jitsuyo Shinan Koho    1971-2017    Toroku Jitsuyo Shinan Koho    1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-15617 A (Rhodia Operations), | 1-2,5,9-14 |
| Y | 30 January 2014 (30.01.2014), | 1-2,5,9-14 |
| A | claims; paragraphs [0002] to [0237]; fig. 1 to 9 | 3-4,6-8 |
| | & JP 2009-544783 A     & US 2010/0051868 A1 | |
| | claims; paragraphs [0002] to [0274]; fig. 1 to 8 | |
| | & US 2014/0048743 A1     & WO 2008/012266 A1 | |
| | & EP 2052053 A1     & FR 2904323 A1 | |
| | & CA 2659033 A1     & KR 10-2009-0034914 A | |
| | & CN 101490211 A     & MX 2009000785 A | |
| | & TW 200813193 A     & BR PI0715641 A | |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 September 2017 (19.09.17) | 03 October 2017 (03.10.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

| International application No. |
|---|
| PCT/JP2017/027689 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2010-256480 A  (Teijin DuPont Films Japan Ltd.),<br>11 November 2010 (11.11.2010),<br>claims; paragraphs [0002] to [0072]<br>(Family: none) | 1,5,9-14<br>1-2,5,9-14<br>3-4,6-8 |
| Y<br>A | JP 9-176366 A  (Nippon Shokubai Co., Ltd.),<br>08 July 1997 (08.07.1997),<br>claims; paragraphs [0002] to [0053]<br>(Family: none) | 1-2,5,9-14<br>3-4,6-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010138270 A